(19) Europäisches Patentamt
European Patent Office
Office européen des brevets

(11) **EP 3 237 579 B1**

(12) **EUROPEAN PATENT SPECIFICATION**

(45) Date of publication and mention
of the grant of the patent:
**14.11.2018 Bulletin 2018/46**

(51) Int Cl.:
*C10G 45/00* (2006.01)    *C10G 47/26* (2006.01)
*C10G 49/22* (2006.01)

(21) Application number: **15825858.2**

(86) International application number:
**PCT/IB2015/059911**

(22) Date of filing: **23.12.2015**

(87) International publication number:
**WO 2016/103199 (30.06.2016 Gazette 2016/26)**

(54) **SYSTEM AND PROCESS FOR INCREASING HEAVY OILS CONVERSION CAPACITY**

SYSTEM UND VERFAHREN ZUR STEIGERUNG DER SCHWERÖLUMWANDLUNGSKAPAZITÄT

SYSTÈME ET PROCÉDÉ POUR AUGMENTER LA CAPACITÉ DE CONVERSION DE PÉTROLES LOURDS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2014 IT MI20142220**

(43) Date of publication of application:
**01.11.2017 Bulletin 2017/44**

(73) Proprietor: **ENI S.p.A.**
**00144 Roma (IT)**

(72) Inventors:
• **MOLINARI, Mario**
**20097 San Donato Milanese (MI) (IT)**
• **MALANDRINO, Alberto Maria**
**20100 Milano (IT)**
• **BONOMI, Susi**
**20100 Milano (IT)**

(74) Representative: **Murgitroyd & Company**
**Scotland House**
**165-169 Scotland Street**
**Glasgow G5 8PL (GB)**

(56) References cited:
**WO-A1-2008/141831    US-A1- 2011 160 505**
**US-B1- 6 436 279**

**Description**

This invention relates to a system and corresponding process for increasing heavy oils conversion capacity.

The hydroconversion of heavy petroleum products can be achieved using different process systems. The core of the technology is the hydroconversion reactor, which may be of the fixed bed, ebullated bed or slurry type. In the latter case the catalyst is dispersed in the reaction medium and is uniformly distributed within the reactor itself. WO 2008/141831 discloses a process and apparatus for hydroconversion of heavy oils.

One EST system (ENI Slurry Technology) (IT-MI2007A1044; IT-MI2007A1045; IT-MI2007A1198; IT-MI2008A1061; IT-MI2010A1989) provides for delivering the effluent from the head of the reactor to an HP/HT high pressure / high temperature liquid-vapor separator. The gas leaving the HP/HT separator is passed to a gas treatment section from which a flow rich in hydrogen is recovered and recycled to the reactor, while the liquid passes through a series of vessels at decreasing pressure and temperature (medium pressure separator, atmospheric column and vacuum column) to separate the reaction products and give rise to recycling of the catalyst and the unconverted charge.

If the reaction products are obtained exclusively in the vapor phase (VPO) (Vapor Phase Outflow), the low pressure sections which might bring about the formation of coke outside the reactor can be avoided, even though this results in a decrease in the capacity of the plant.

When catalyst is present and hydrogen is absent, at pressures below the reactor pressure, it has been found by experiment that dehydrogenation reactions leading to the production of hydrogen and coke can take place. High temperature, low pressure and long residence times in the liquid holdups in the vessels can render solids formation outside the reactor of the same order of magnitude as that within the reactor. In addition to this, if the vacuum unit is not sufficiently dimensioned at the design stage the formation of hydrogen at the base of the vacuum column may have a significant impact on the fractionation capacity of the column.

By adopting an EST system according to which the products are obtained only in the vapor phase (VPO), which we will call EST-VPO, the slurry is confined to the zone of high $H_2$ partial pressure, eliminating all the problems associated with dehydrogenation and the formation of solid outside the reactor. Against this advantage the capacity of an EST-VPO plant with direct recycling from the HP/HT separator is significantly lower, for the same reaction temperature, than that of an EST plant with recycling from the vacuum column. The loss of capacity may be compensated by increasing the reaction temperature, even though this results in an increase in the formation of solid within the reactor itself.

Feeding a gas with a high $H_2$ concentration (also referred to as "secondary" in order to distinguish it from the "primary" gas of the same composition fed to the reactor) to the connecting line between the reactor and high temperature / high pressure separator is one way of increasing the conversion capacity of an EST-VPO plant on account of the stripping effect of the gas itself.

An EST-VPO system which does not provide for the use of secondary gas has a smaller capacity for the same operating conditions because the liquid leaving the HP/HT separator and recycled to the reactor has the same composition as the liquid leaving the reactor. Using the secondary gas increases the flow rate of reaction products leaving the top of the separator. At the same time the composition of the liquid phase recycled to the reactor changes and is again subjected to a hydroconversion reaction, but at this point it is impoverished in lighter components which have passed into the gas phase. Because products only leave from the top of the separator in the EST-VPO system, the increase in their flow rate coincides with an increase in the capacity of the plant. It can be demonstrated that the more the liquid recycled to the reactor is similar to that leaving the reactor in terms of composition, the greater the shift towards the formation of light products. In comparison with an EST-VPO system which does not make provision for it, through the effect of the stripping action of the secondary gas the liquid recycled to the reactor will be heavier than that leaving the reactor and as a consequence the quantity of products leaving with the vapor phase will increase, although with a different composition. Feeding gas with a high hydrogen content to the connecting line between the head of the reactor and the high pressure / high temperature HP/HT separator makes it possible to increase the conversion capacity of an EST-VPO system.

The length of line downstream from the secondary gas feed acts as a theoretical liquid/vapor equilibrium stage. The geometry and fluid dynamics of the connecting line are designed to achieve equilibrium between the liquid and vapor in the reactor effluent/secondary gas mixture before entering the separator. Where liquid/vapor equilibrium does not have to be achieved the effect of adding the secondary gas can in the worst of cases be reduced to a mere addition of gas.

While the use of stripping gas to assist release of the components in the gas phase which would normally be confined in the liquid phase and feeding a stripping gas to the connecting line between the head of the reactor and the separator is known (IT-MI2007A1044), no description has been provided as to how the stripping gas should be fed to that line.

The connecting line between the head of the reactor and the separator must be suitably designed in order to achieve liquid/vapor equilibrium in the flow before it enters the separator.

We have now found that a suitable upward inclination of the connecting line between the head of the reactor and the separator is essential for achieving liquid/vapor equilibrium before entering the liquid-vapor separator.

Combining the inclination selected with a suitable insertion of the secondary gas feed line, at a suitable length and/or at a suitable cross-section of the connecting line may also be advisable.

The system for the hydroconversion of heavy oils constituting the subject matter of this invention essentially comprises a reactor, a liquid-vapor separator and a section for stripping conversion products outside the reactor comprising a conduit for feeding stripping gases located in such a way that the said gas feed takes place at a point in a connection conduit between the head of the reactor and the liquid-vapor separator in which the said connection conduit is upwardly inclined, at least from the feed point, with a gradient of between 2% and 20%, preferably between 3% and 12%.

With the line suitably upwardly inclined, within a specific range of gas/liquid flow rates leaving the reactor, a stratified wavy flow regime is set up, in which suitable remixing between the phases takes place from the point at which the secondary gas is fed in.

The establishment of a stratified wavy flow regime makes possible the continuous renewal of the surface of the liquid in contact with the gas, thus increasing the efficiency of material exchange.

It is recommended that the stripping gas feed conduit should be inclined with respect to the axis of the connection conduit between the head of the reactor and the liquid-vapor separator at an angle of between 20° and 65°, more preferably between 30° and 60°, even more preferably between 40° and 50°. It is also advisable that the stripping gas flow should preferably occur in a downward direction.

It is also preferable that the said feed conduit, with the angles of inclination recommended above, should lie in the vertical plane passing through the axis of the connection conduit.

Preferably the cross-section (A) of the conduit providing the connection between the head of the reactor and the liquid-vapor separator and the length (L) of the portion of that conduit between the point of entry for the stripping gases and the point of entry to the separator satisfy the following relationships:

$$(A \times L)(Q_V + Q_{Vsec} + Q_L) > 10 \text{ s, more preferably} > 15 \text{ s,}$$

$$(Q_V + Q_L)/A > 0.5 \text{ m/s, more preferably} > 1 \text{ m/s,}$$

$$2 > Q_{Vsec}/Q_V > 0.25, \text{ more preferably } 1 > Q_{Vsec}/Q_V > 0.5$$

where $Q_V$ and $Q_L$ are the volumetric flow rates of vapor and slurry (liquid + solid) leaving the head of the reactor and $Q_{Vsec}$ is the volumetric flow rate of secondary gas.

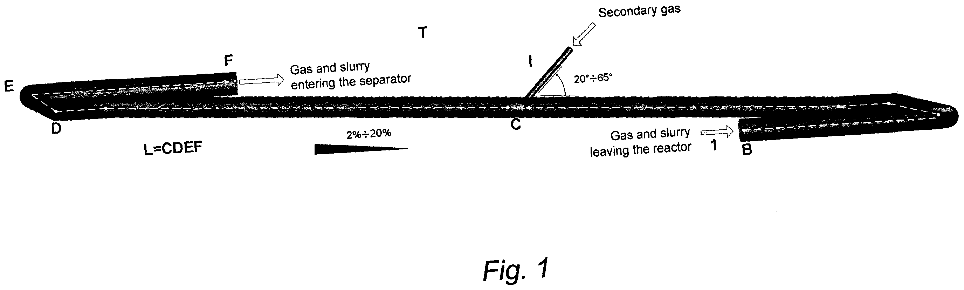

One embodiment of conduit (T) connecting the head of the reactor to the liquid-vapor separator and conduit (I) for the entry of stripping gas is illustrated in Figure 1.

The flow of gas and slurry (1) leaving the reactor enters at point (B) on the conduit (T) and undergoes stripping in the portion between point (C) and point (F) by means of the gases entering through entry conduit (I) inclined at an angle of between 20° and 65° with respect to the axis of conduit (T). The section of conduit (T) to which the entry conduit is inserted is inclined upwards with a gradient of between 2% to 20% with respect to a horizontal plane. The flow of gas and slurry which has been stripped finally exits at point (F) to enter the separator.

The length (L) of section of conduit (T) extends from the point of entry for the stripping gas as far as the point of entry to the separator (from point (C) to point (F) in Figure 1, passing through points (D) and (E)).

Obstacles of suitable geometry which assist intimate remixing of the liquid and vapor phase and allow liquid/vapor equilibrium to be achieved may be inserted within the conduit connecting the head of the reactor to the entry to the separator.

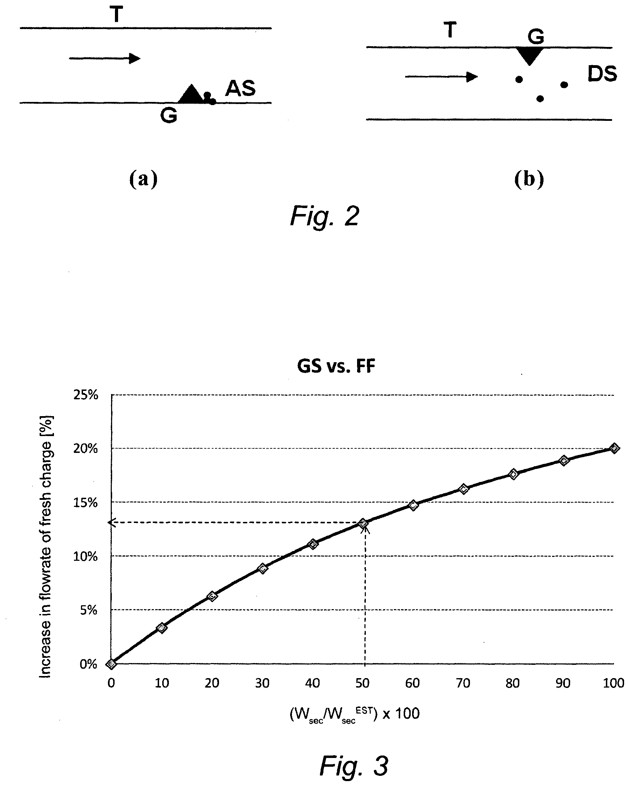

It is recommended that the said obstacles be inserted along the top wall within the said conduit providing a connection between the head of the reactor and the liquid-vapor separator in such a way as to cause the gas to thread its way beneath the liquid thus bringing about adequate remixing and at the same time avoiding any accumulation of solid behind the obstacle, which may occur all the more so because of the positive gradient of the conduit. This embodiment is illustrated in Figure 2, where with an obstacle (G) located:

- along the lower wall of conduit (T) problems may occur with the accumulation of solids (AS) (Figure 2a);
- along the upper wall of conduit (T) the solids remain dispersed (DS) (Figure 2b).

The system applies to all types of reactors in which the outflow comprises a two-phase L/V flow, also including a flow obtained from the merging of at least one liquid flow and at least one vapor flow leaving the reactor, including fixed bed reactors which might contain dispersed solids, slurry reactors, preferably a slurry bubble column, and ebullated bed reactors.

A further object of this invention is the process for the hydroconversion of heavy oils carried out using the system according to the invention.

The said process for the hydroconversion of heavy oils comprises sending the heavy oil to a hydrotreatment stage performed in a reactor with a suitable hydrogenation catalyst, into which reactor hydrogen or a mixture of hydrogen and light hydrocarbons are delivered, performing a stripping stage with a suitable stripping gas on the liquid and vapor flow leaving the reactor, or on the flow obtained from the merging of at least one liquid flow and at least one vapor flow leaving the reactor, passing the said flow to a liquid-vapor separation in a suitable separator separating the liquid phase, which is recycled to the reactor, less purges, from the vapor phase containing the conversion products, the said stripping stage being performed by means of a conduit delivering stripping gas positioned at a point on the conduit connecting the head of the reactor and the liquid-vapor separator and characterized in that the said connection conduit is inclined upwards with a gradient of between 2% and 20%, preferably between 3% and 12%, at least from the point of entry. The process claimed is particularly recommended in the case of the stage of hydrotreatment performed in a reactor with a slurry phase hydrogenation catalyst, preferably selected from a bubble column or a ebullated bed reactor.

When carried out using a slurry phase reactor it is also recommended that it should be operated with a volumetric ratio at the outlet from the reactor of:

$$\frac{\text{vapor flow rate } (Q_V)}{(\text{vapor flow rate } (Q_V) + \text{slurry flow rate } (Q_L))}$$

of more than 0.75, preferably more than 0.85,
where the slurry comprises liquid plus solid.

The cross section (A) of the connection conduit between the head of the reactor and the liquid-vapor separator and the length (L) of the section of the said conduit from the point of entry for the stripping gases to the point of entry to the separator (from point (C) to point (F) in Figure 1) preferably satisfies the following relationships:

$$(A \times L)(Q_V + Q_{Vsec} + Q_L) > 10 \text{ s, more preferably} > 15 \text{ s,}$$

$$(Q_V + Q_L)/A > 0.5 \text{ m/s, more preferably} > 1 \text{ m/s,}$$

$$2 > Q_{Vsec}/Q_V > 0.25, \text{ more preferably } 1 > Q_{Vsec}/Q_V > 0.5$$

where $Q_{Vsec}$ is the volumetric flow rate of the secondary gas.

The hydrotreatment stage is preferably performed at a temperature of between 400 and 450°C and a pressure of between 100 and 200 atm.

The hydrogenation catalyst is preferably based on Mo or W sulfide.

Further details may be found in the abovementioned application IT-MI2007A1198.

In order that the invention be better defined some examples demonstrating the effectiveness of using secondary gas in the process embodiment according to the invention leading to the acquisition of products in the gas phase (VPO) are described.

Examples

As already mentioned previously, a change from the EST system (with conversion products in the liquid phase and the presence of low pressure sections) to an EST-VPO system (in which the products leave only in the gas phase) results in a drastic reduction in the potential capacity of the plant. In order to overcome this the reaction temperature must be increased and secondary gas must be used because in the absence of the latter the potential capacity of the plant, other operating conditions being equal, is in any event reduced by approximately 20% in comparison with the EST reference case.

The embodiment of conduit (T) connecting the head of the reactor to the liquid-vapor separator and conduit (I) feeding the stripping gases is that already illustrated in Figure 1, in which:

- the section of conduit connecting the point of entry for the secondary gas to point (D) is inclined upwards with a gradient of 6%;
- the entry conduit for the stripping gases is inclined with respect to the axis of the conduit connecting the head of the reactor to the liquid-vapor separator by an angle of 45°;
- the flow of stripping gas fed to the connection conduit between the head of the reactor and the separator takes place in a downward direction, in the vertical plane passing through the axis of the connection conduit.

Bearing in mind that the flow rate of secondary gas ($W_{sec}$) varies between 0 and 100, where 0 corresponds to the absence of secondary gas whereas 100 indicates that the flow of secondary gas is capable of ensuring the same potential capacity of a plant using an EST system ($W_{sec}^{EST}$), although operating at a higher reaction temperature, the increase in plant capacity and percentage terms as the secondary gas is varied is shown in Table 1.

Table 1

| $(W_{sec}/W_{sec}^{EST})$ x 100 | Increase in fresh charge |
|---|---|
| 0 | - |
| 10 | 3.4% |
| 20 | 6.3% |
| 30 | 8.9% |
| 40 | 11.1% |
| 50 | 13.1% |
| 60 | 14.8% |
| 70 | 16.3% |
| 80 | 17.7% |
| 90 | 18.9% |
| 100 | 20.1% |

Thus, for example using 50% of the flow rate of secondary gas required to achieve the potential capacity of an EST system plant (although operating at higher temperature) there is an increase of 13.1% in fresh charge.

The effect of secondary gas on the flow rate of fresh charge in terms of percentage increase can be displayed by graphically illustrating what is set out in the table (Figure 3).

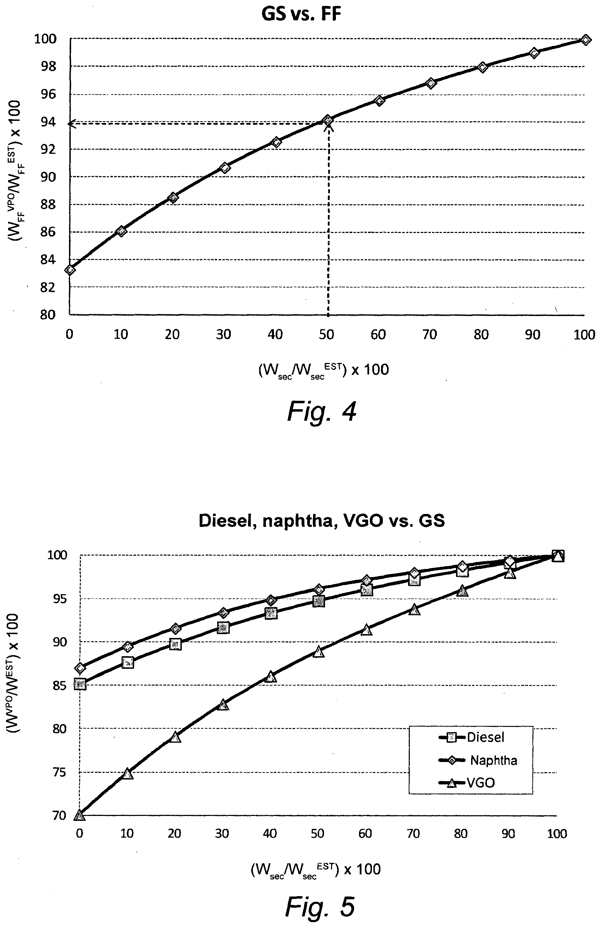

Figure 4 also shows the effect of secondary gas on the increase in the capacity of an EST-VPO plant ($W_{FF}^{VPO}$) operated at higher temperature, in comparison with the potential capacity of an EST ($W_{FF}^{EST}$). In the latter case, using 50% of the flow rate of secondary gas the potential capacity of the plant achieves 94% of the maximum flow rate which can be obtained in accordance with the above definition.

The stripping effect of the secondary gas has the result that products which are "heavier" in comparison with the situation in which it is not used leave the plant, but the benefit achieved in terms of productivity is appreciable. The different quality of the products obtained can be assessed by analysing the percentage increase in Diesel, Naphtha and VGO products as a function of the $(W_{sec}/W_{sec}^{EST})$ ratio expressed in percentage terms relative to the secondary gas as shown in Table 2.

Table 2 - Increase in products as the Secondary Gas varies

| $(W_{sec}/W_{sec}^{EST})$ x 100 | Diesel | Naphtha | VGO |
|---|---|---|---|
| 0 | - | - | - |
| 10 | 2.9% | 2.9% | 6.8% |
| 20 | 5.4% | 5.3% | 12.8% |
| 30 | 7.6% | 7.4% | 18.1% |
| 40 | 9.5% | 9.1% | 22.7% |
| 50 | 11.2% | 10.5% | 26.8% |

5

(continued)

| $(W_{sec}/W_{sec}^{EST}) \times 100$ | Diesel | Naphtha | VGO |
|---|---|---|---|
| 60 | 12.7% | 11.6% | 30.4% |
| 70 | 14.0% | 12.7% | 33.8% |
| 80 | 15.2% | 13.5% | 36.9% |
| 90 | 16.3% | 14.3% | 39.8% |
| 100 | 17.3% | 15.0% | 42.5% |

Here again, if 50% of the flow rate of secondary gas is considered, the effect achieved is increases of 11.2%, 10.5% and 26.8% in Diesel, Naphtha and VGO respectively. The effect of the overall increase on the three products of interest is also shown in Figure 5 which comprises the change in the flow rate of products in relation to the $(W_{sec}/W_{sec}^{EST}) \times 100$ ratio of secondary gas in percentage terms.

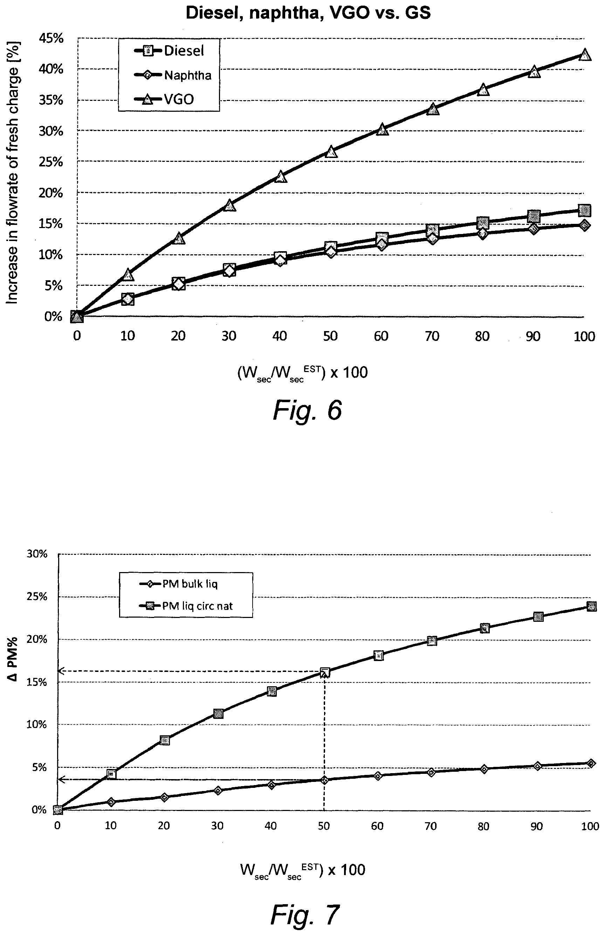

Also, with 50% of secondary gas as defined above, 94%, 96% and 89% of the maximum flow rate which can be achieved for Diesel, Naphtha and VGO respectively are achieved (Figure 6).

As may be seen, the secondary gas has a greater influence on the VGO leaving the plant in comparison with Diesel and Naphtha, an indication that the stripping effect is effective in displacing even rather heavy compounds towards the gas phase.

It has already been pointed out that in comparison with an EST-VPO system without the use of secondary gas the liquid recycled to the reactor is heavier than that leaving the reactor itself as a result of the stripping action of the gas. In fact, when the molecular weight of the liquid phase leaving the HP separator recycled to the reactor is monitored in comparison with the molecular weight of the liquid phase leaving the head of the reactor, as the secondary gas increases it is observed that the two flows have an increasingly marked difference in terms of composition and therefore molecular weight. In the absence of secondary gas the molecular weights (MW) of the two liquid phases are identical, but as the flow rate of secondary gas is increased the lighter compounds present in the liquid phase pass into the products which then leave the plant in the gas phase, while the liquid phase becomes increasingly heavier. With 50% of secondary gas, according to the definition given above, the molecular weights of the two flows differ by 11%. Figure 7 shows the change in MW of the two liquid flows as the secondary gas $(W_{sec}/W_{sec}^{EST})$, both expressed in percentage terms, is varied.

**Claims**

1. System for heavy oils hydroconversion comprising a reactor, a liquid-vapor separator, and a stripping section of conversion products, external to the reactor, comprising a supply conduit of the stripping gas in a point of the connection conduit between the reactor head and the liquid-vapor separator, the said connection conduit being upwardly inclined, at least from the point of intersection between the supply conduit and the connection conduit, with a gradient of between 2% and 20% with respect to the horizontal plane.

2. System according to claim 1, wherein the supply conduit of the stripping gas is inclined to the axis of the connection conduit between the head of the reactor and the liquid-vapor separator at an angle of between 20° and 65°, preferably between 30° and 60°, more preferably between 40° and 50°.

3. System according to claim 1, wherein the stripping gas flow entering the connection conduit between the reactor head and the separator is in a downward direction.

4. System according to claim 2, wherein the supply conduit lies in the vertical plane passing through the axis of the connection conduit.

5. The system according to claim 1 wherein the reactor is a bubble column or ebullated bed reactor.

6. System according to claim 1, wherein the connection conduit between the reactor head and the liquid-vapor separator, at least from the point of intersection between the supply conduit and the connection conduit, is inclined upward with a gradient of between 3% and 12%.

7. System according to claim 1, wherein obstacles of suitable geometry are inserted inside the connection conduit between the reactor head and the vapor-liquid separator, preferably along the upper wall inside the said conduit, which facilitates intimate mixing of the liquid and vapor phases and makes it possible for liquid /vapor equilibrium to be achieved.

**8.** Process for heavy oils hydroconversion comprising passing the heavy oil to a hydrotreatment stage carried out in a reactor with a suitable hydrogenation catalyst, to which reactor hydrogen or a mixture of hydrogen and light hydrocarbons are fed, performing a step of stripping with suitable stripping gas on the flow of liquid and vapor phase leaving the reactor, or on the flow obtained merging at least one liquid flow and at least one vapor flow leaving the reactor, passing said flow to liquid-vapor separation in a suitable separator separating the recycled liquid phase to the reactor, apart from purges, from the vapor phase containing the conversion products obtained only in the vapor phase, the said stripping step being carried out by means of feeding stripping gas at a point in the connection conduit between the reactor head and the liquid-vapor separator, **characterized in that** the said connection conduit is inclined upwards, at least from the point of intersection between the supply conduit and the connection conduit, with a gradient of between 2% and 20% with respect to a horizontal plane.

**9.** Process according to claim 8, wherein the hydrotreatment step is carried out in a reactor with a hydrogenation catalyst in slurry phase, preferably selected from a bubble column or ebullated bed reactor.

**10.** Process according to claim 9, wherein at the exit from the reactor the volumetric ratio:

$$\frac{\text{vapor flow rate } (Q_V)}{(\text{vapor flow rate } (Q_V) + \text{slurry flow rate } (Q_L))}$$

is greater than 0.75, preferably greater than 0.85, where the slurry comprises the liquid plus solid.

**11.** Process according to claim 8, wherein the feed conduit for the stripping gas is inclined with respect to the axis of the connection conduit between the reactor head and the liquid-vapor separator at an angle of between 20° and 65°, preferably between 30° and 60°, more preferably between 40° and 50°.

**12.** Process according to claim 8, wherein the section (A) of the connection conduit between the reactor head and the liquid-vapor separator and the length (L) of the section of said conduit from the point of entry of the stripping gas to the separator point of entry satisfy the following relationships

$$(A \times L) \, (Q_V + Q_{Vsec} + Q_L) \; > 10 \text{ s}$$

$$(Q_V + Q_L) / A \; > 0.5 \text{ m} / \text{s}$$

$$2 > Q_{Vsec} / Q_V \; > 0.25$$

where $Q_V$ and $Q_L$ are the volumetric flows of vapor and slurry (liquid + solid) leaving the head of the reactor and $Q_{Vsec}$ is the volumetric flow rate of the secondary gas.

**13.** Process according to claim 10, wherein the section (A) of the connection conduit between the reactor head and the liquid-vapor separator and the length (L) of the section of said conduit from point of entry for the stripping gas to the separator point of entry satisfy the following relationships

$$(A \times L) \, (Q_V + Q_{Vsec} + Q_L) \; > 15 \text{ s}$$

$$(Q_V + Q_L) / A \; > 1 \text{ m} / \text{s}$$

$$1 > Q_{Vsec} / Q_V > 0.5$$

**14.** Process according to claim 8, wherein the hydrotreatment step is conducted at a temperature between 400 and 450°C and at a pressure of between 100 and 200 atm.

**15.** Process according to claim 8, wherein the hydrogenation catalyst is based on Mo or W sulfide.

**Patentansprüche**

**1.** System zur Hydroumwandlung von Schwerölen, beinhaltend einen Reaktor, einen Tröpfchenabscheider und, extern vom Reaktor, einen Abschnitt zum Strippen von Umwandlungsprodukten, beinhaltend eine Zufuhrleitung des Strippinggases an einem Punkt der Verbindungsleitung zwischen dem Reaktorkopf und dem Tröpfchenabscheider, wobei die Verbindungsleitung mindestens ab dem Schnittpunkt zwischen der Zufuhrleitung und der Verbindungsleitung mit einer Steigung zwischen 2 % und 20 %, bezogen auf die horizontale Ebene, nach oben geneigt ist.

**2.** System gemäß Anspruch 1, wobei die Zufuhrleitung des Strippinggases zur Achse der Verbindungsleitung zwischen dem Kopf des Reaktors und dem Tröpfchenabscheider in einem Winkel zwischen 20° und 65°, vorzugsweise zwischen 30° und 60°, bevorzugter zwischen 40° und 50°, geneigt ist.

**3.** System gemäß Anspruch 1, wobei der Strippinggasfluss, der in die Verbindungsleitung zwischen dem Reaktorkopf und dem Abscheider eintritt, in einer Abwärtsrichtung verläuft.

**4.** System gemäß Anspruch 2, wobei die Zufuhrleitung in der vertikalen Ebene liegt, die durch die Achse der Verbindungsleitung führt.

**5.** System gemäß Anspruch 1, wobei der Reaktor ein Blasensäulen- oder Sprudelbettreaktor ist.

**6.** System gemäß Anspruch 1, wobei die Verbindungsleitung zwischen dem Reaktorkopf und dem Tröpfchenabscheider mindestens ab dem Schnittpunkt zwischen der Zufuhrleitung und der Verbindungsleitung mit einer Steigung zwischen 3 % und 12 % nach oben geneigt ist.

**7.** System gemäß Anspruch 1, wobei Hindernisse einer geeigneten Geometrie im Inneren der Verbindungsleitung zwischen dem Reaktorkopf und dem Tröpfchenabscheider eingefügt sind, vorzugsweise entlang der oberen Wand im Inneren der Leitung, was ein inniges Mischen der Flüssig- und der Dampfphase fördert und es möglich macht, dass ein Flüssigkeits-Dampf-Gleichgewicht erreicht wird.

**8.** Verfahren zur Hydroumwandlung von Schwerölen, beinhaltend das Führen des Schweröls zu einer Wasserstoffbehandlungsstufe, die in einem Reaktor mit einem eingespeist wird, das Ausführen eines Schritts des Strippens mit geeignetem Strippinggas an dem Fluss von Flüssig- und Dampfphase, der den Reaktor verlässt, oder an dem Fluss, der durch Zusammenführen von mindestens einem Flüssigkeitsfluss und mindestens einem Dampffluss, die den Reaktor verlassen, erhalten wird, das Führen des Flusses zur Tröpfchenabscheidung in einem geeigneten Abscheider, der die zum Reaktor rückgeführte Flüssigphase, ausgenommen Spülungen, von der Dampfphase, welche die nur in der Dampfphase erhaltenen Umwandlungsprodukte enthält, abscheidet, wobei der Strippingschritt mittels Einspeisen von Strippinggas an einem Punkt in der Verbindungsleitung zwischen dem Reaktorkopf und dem Tröpfchenabscheider durchgeführt wird, **dadurch gekennzeichnet, dass** die Verbindungsleitung mindestens ab dem Schnittpunkt zwischen der Zufuhrleitung und der Verbindungsleitung mit einer Steigung zwischen 2 % und 20 %, bezogen auf eine horizontale Ebene, nach oben geneigt ist.

**9.** Verfahren gemäß Anspruch 8, wobei der Wasserstoffbehandlungsschritt in einem Reaktor mit einem Hydrierungskatalysator in Suspensionsphase durchgeführt wird, vorzugsweise ausgewählt aus einem Blasensäulenreaktor oder Sprudelbettreaktor.

**10.** Verfahren gemäß Anspruch 9, wobei am Ausgang des Reaktors das Volumenverhältnis:

$$\frac{\text{Dampfflussrate (Qv)}}{(\text{Dampfflussrate } (Q_V) + \text{Suspensionsflussrate } (Q_L))}$$

größer als 0,75, vorzugsweise größer als 0,85, ist, wobei die Suspension die Flüssigkeit plus Feststoff beinhaltet.

**11.** Verfahren gemäß Anspruch 8, wobei die Einspeiseleitung für das Strippinggas, bezogen auf die Achse der Verbindungsleitung zwischen dem Reaktorkopf und dem Tröpfchenabscheider, in einem Winkel zwischen 20° und 65°, vorzugsweise zwischen 30° und 60°, bevorzugter zwischen 40° und 50°, geneigt ist.

**12.** Verfahren gemäß Anspruch 8, wobei der Querschnitt (A) der Verbindungsleitung zwischen dem Reaktorkopf und dem Tröpfchenabscheider und die Länge (L) des Abschnitts dieser Leitung vom Eintrittspunkt des Strippinggases zum Eintrittspunkt am Abscheider die folgenden Beziehungen erfüllen:

$$(A \times L) (Q_V + Q_{Vsec} + Q_L) > 10 \text{ s}$$
$$(Q_V + Q_L)/A > 0,5 \text{ m/s}$$
$$2 > Q_{Vsec}/Q_V > 0,25$$

wobei Qv und $Q_L$ die Volumenflüsse von Dampf und Suspension (Flüssigkeit + Feststoff), die den Kopf des Reaktors verlassen, sind und $Q_{Vsec}$ die Volumenflussrate des Sekundärgases ist.

**13.** Verfahren gemäß Anspruch 10, wobei der Querschnitt (A) der Verbindungsleitung zwischen dem Reaktorkopf und dem Tröpfchenabscheider und die Länge (L) des Abschnitts dieser Leitung vom Eintrittspunkt des Strippinggases zum Eintrittspunkt am Abscheider die folgenden Beziehungen erfüllen:

$$(A \times L) (Q_V + Q_{Vsec} + Q_L) > 15 \text{ s}$$
$$(Q_V + Q_L)/A > 1 \text{ m/s}$$
$$1 > Q_{Vsec}/Q_V > 0,5$$

**14.** Verfahren gemäß Anspruch 8, wobei der Wasserstoffbehandlungsschritt bei einer Temperatur zwischen 400 und 450 °C und bei einem Druck zwischen 100 und 200 atm vorgenommen wird.

**15.** Verfahren gemäß Anspruch 8, wobei der Hydrierungskatalysator auf Mo- oder W-Sulfid basiert.

**Revendications**

**1.** Système pour l'hydroconversion d'huiles lourdes comprenant un réacteur, un séparateur liquide-vapeur, et une section d'extraction au gaz (stripping) de produits de conversion, à l'extérieur du réacteur, comprenant une conduite d'alimentation en gaz d'extraction à un point de la conduite de raccordement entre la tête de réacteur et le séparateur liquide-vapeur, ladite conduite de raccordement étant inclinée vers le haut, au moins à partir du point d'intersection entre la conduite d'alimentation et la conduite de raccordement, avec une pente comprise entre 2 % et 20 % par rapport au plan horizontal.

**2.** Système selon la revendication 1, dans lequel la conduite d'alimentation en gaz d'extraction est inclinée par rapport à l'axe de la conduite de raccordement entre la tête du réacteur et le séparateur liquide-vapeur à un angle compris entre 20° et 65°, de préférence entre 30° et 60°, de préférence encore entre 40° et 50°.

**3.** Système selon la revendication 1, dans lequel le flux de gaz d'extraction entrant dans la conduite de raccordement entre la tête de réacteur et le séparateur a une direction allant du haut vers le bas.

**4.** Système selon la revendication 2, dans lequel la conduite d'alimentation s'étend dans le plan vertical passant par l'axe de la conduite de raccordement.

**5.** Système selon la revendication 1, dans lequel le réacteur est une colonne à bulles ou un réacteur à lit bouillonnant.

**6.** Système selon la revendication 1, dans lequel la conduite de raccordement entre la tête de réacteur et le séparateur liquide-vapeur, au moins à partir du point d'intersection entre la conduite d'alimentation et la conduite de raccordement, est inclinée vers le haut avec une pente comprise entre 3 % et 12 %.

**7.** Système selon la revendication 1, dans lequel des obstacles de géométrie appropriée sont insérés à l'intérieur de la conduite de raccordement entre la tête de réacteur et le séparateur liquide-vapeur, de préférence le long de la paroi supérieure à l'intérieur de ladite conduite, ce qui facilite le mélange intime des phases liquide et vapeur et rend possible d'atteindre un équilibre liquide/vapeur.

**8.** Procédé pour l'hydroconversion d'huiles lourdes comprenant l'envoi de l'huile lourde à un stade d'hydrotraitement effectué dans un réacteur avec un catalyseur d'hydrogénation approprié, réacteur dans lequel de l'hydrogène ou un mélange d'hydrogène et d'hydrocarbures légers sont amenés, la réalisation d'une étape d'extraction au gaz avec des gaz d'extraction appropriés sur le flux de phase liquide et vapeur quittant le réacteur, ou sur le flux obtenu de l'union d'au moins un flux de liquide et d'au moins un flux de vapeur quittant le réacteur, l'envoi dudit flux à une séparation liquide-vapeur dans un séparateur approprié séparant la phase liquide recyclée au réacteur, à l'exception de purges, de la phase vapeur contenant les produits de conversion obtenus uniquement dans la phase vapeur, ladite étape d'extraction au gaz étant effectuée en amenant du gaz d'extraction à un point de la conduite de raccordement entre la tête de réacteur et le séparateur liquide-vapeur, **caractérisé en ce que** ladite conduite de raccordement est inclinée vers le haut, au moins à partir du point d'intersection entre la conduite d'alimentation et la conduite de raccordement, avec une pente comprise entre 2 % et 20 % par rapport au plan horizontal.

**9.** Procédé selon la revendication 8, dans lequel l'étape d'hydrotraitement est effectuée dans un réacteur avec un catalyseur d'hydrogénation en phase boueuse, sélectionné de préférence parmi une colonne à bulles ou un réacteur à lit bouillonnant.

**10.** Procédé selon la revendication 9, dans lequel à la sortie du réacteur, le rapport volumétrique :

$$\frac{\text{débit vapeur } (Q_V)}{(\text{débit vapeur } (Q_V) + \text{débit boue } (Q_L))}$$

est supérieur à 0,75, de préférence supérieur à 0,85, où la boue comprend le liquide plus le solide.

**11.** Procédé selon la revendication 8, dans lequel la conduite d'amenée pour le gaz d'extraction est inclinée par rapport à l'axe de la conduite de raccordement entre la tête de réacteur et le séparateur liquide-vapeur à un angle compris entre 20° et 65°, de préférence entre 30° et 60°, de préférence encore entre 40° et 50°.

**12.** Procédé selon la revendication 8, dans lequel la section (A) de la conduite de raccordement entre la tête de réacteur et le séparateur liquide-vapeur et la longueur (L) de la section de ladite conduite à partir du point d'entrée du gaz d'extraction jusqu'au point d'entrée du séparateur satisfont les relations suivantes :

$(A \times L) (Q_V + Q_{Vsec} + Q_L) > 10 \text{ s}$
$(Q_V + Q_L) / A > 0,5 \text{ m / s}$
$2 > Q_{Vsec} / Q_V > 0,25$

où $Q_v$ et $Q_L$ sont les débits volumétriques de vapeur et de boue (liquide + solide) quittant la tête du réacteur et $Q_{Vsec}$ est le débit volumétrique du gaz secondaire.

**13.** Procédé selon la revendication 10, dans lequel la section (A) de la conduite de raccordement entre la tête de réacteur et le séparateur liquide-vapeur et la longueur (L) de la section de ladite conduite à partir du point d'entrée pour le gaz d'extraction jusqu'au point d'entrée du séparateur satisfont les relations suivantes :

$(A \times L) (Q_V + Q_{Vsec} + Q_L) > 15 \text{ s}$
$(Q_V + Q_L) / A > 1 \text{ m / s}$
$1 > Q_{Vsec} / Q_V > 0,5.$

**14.** Procédé selon la revendication 8, dans lequel l'étape d'hydrotraitement est conduite à une température comprise entre 400 et 450 °C et à une pression comprise entre 100 et 200 atm.

**15.** Procédé selon la revendication 8, dans lequel le catalyseur d'hydrogénation est à base de sulfure de Mo ou W.

Secondary gas

T

F

Gas and slurry
entering the separator

I

E

20°÷65°

D

L=CDEF

2%÷20%

C

Gas and slurry
leaving the reactor

1

B

*Fig. 1*

Fig. 2

GS vs. FF

Fig. 3

**GS vs. FF**

*Fig. 4*

**Diesel, naphtha, VGO vs. GS**

*Fig. 5*

**Diesel, naphtha, VGO vs. GS**

*Fig. 6*

*Fig. 7*

**EP 3 237 579 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008141831 A
- IT MI20071044 A
- IT MI20071045 A
- IT MI20071198 A
- IT MI20081061 A
- IT MI20101989 A